Europäisches Patentamt

(19) European Patent Office

Office européen des brevets

(11) Publication number : **0 302 726 B1**

(12) **EUROPEAN PATENT SPECIFICATION**

(45) Date of publication of patent specification :
18.09.91 Bulletin 91/38

(51) Int. Cl.⁵ : **B62D 25/04, B60J 5/04**

(21) Application number : **88307205.0**

(22) Date of filing : **04.08.88**

(54) Vehicle body assembly.

(30) Priority : **07.08.87 GB 8718787**

(43) Date of publication of application :
**08.02.89 Bulletin 89/06**

(45) Publication of the grant of the patent :
**18.09.91 Bulletin 91/38**

(84) Designated Contracting States :
**DE FR GB IT SE**

(56) References cited :
**EP-A- 0 189 819**
**US-A- 2 733 096**
**PATENT ABSTRACTS OF JAPAN, vol. 7, no. 24**
**(M-189)[1169], 29th January 1983; & JP-A-57**
**178 974 (NISSAN JIDOSHA K.K.) 04-11-1982**

(73) Proprietor : **JAGUAR CARS LIMITED**
**Browns Lane**
**Allesley Coventry CV5 9DR West Midlands**
**(GB)**

(72) Inventor : **Reaney, Derek John**
**54 Clovelley Way**
**Nuneaton Warwickshire CV11 6YB (GB)**

(74) Representative : **Cundy, Anthony Brian et al**
**Anthony Cundy & Company 384 Station Road**
**Dorridge**
**Solihull West Midlands B93 8ES (GB)**

## Description

The present invention relates to a vehicle body assembly and more particularly relates to a vehicle body assembly in which a vehicle door interlocks with a body pillar assembly to provide support for the pillar assembly in the event of the vehicle overturning.

It is conventional to assemble a vehicle body in such a way as to inhibit collapse of the passenger compartment of the vehicle in the event of the vehicle overturning. However, in cases where a pillar assembly defining an opening in the passenger compartment has a substantial rake, and particularly where the vehicle is convertible, the pillar assembly may have to withstand substantial loads if the vehicle should overturn. Conventional vehicle body assemblies can collapse in the event of the vehicle overturning.

EP-A-0189819 discloses a convertible automobile in which a vertical support post is provided in addition to an inclined quarterglass frame. The vertical support post extends upwardly from the lower door frame to engage the top of the pillar assembly. A locking bolt, mechanically connected with the door locking handle, is operable to extend into the pillar assembly when the door is closed, but there is no interaction between the inclined leading edge of the quarterglass frame and the pillar assembly.

US-A-2733096 discloses an automobile body and frame which includes the provision of replaceable aluminium die-cast upper door frame sections offering economical style modification, ultra narrow front upper hinge pillars for maximum visibility and occupant shoulder width, and an underbody extending the full bumper-to-bumper length of the car for maximum rigidity. The doors are not relied on for any contribution to the rigidity of the body frame.

It is an object of the present invention to provide a vehicle body assembly which is more resistant to collapse of the passenger compartment in the event of the vehicle overturning.

According to the present invention there is provided a vehicle body assembly (of the type known, eg from EP-A-0189819) comprising a pillar assembly having a substantial rake, and a vehicle door including a quarterglass frame incorporating a leading edge having substantially the same rake as the pillar assembly for providing support for the pillar assembly in the event of the vehicle overturning, characterised in that a windscreen frame and a lipped seal are secured to the pillar assembly such that the lipped seal and the pillar assembly extend along a side of the windscreen frame, the pillar assembly having an exposed flange extending substantially parallel to the side of the windscreen frame, and in that a channel member, which is substantially U-shaped in cross-section, extends along the leading edge of the quarterglass frame such that, as the door is closed, the leading edge of the quarterglass frame engages in the lipped seal, the lipped seal being positioned between the leading edge of the quarterglass frame and windscreen frame, whereby said channel member also extends along opposite sides of the exposed flange of the pillar assembly while not inhibiting the opening of the door.

The channel member may be secured to or may be integral with the quarterglass frame of the door.

A seal may be positioned between the channel member and the pillar assembly in the closed position of the vehicle door.

The channel member may be made of aluminium alloy.

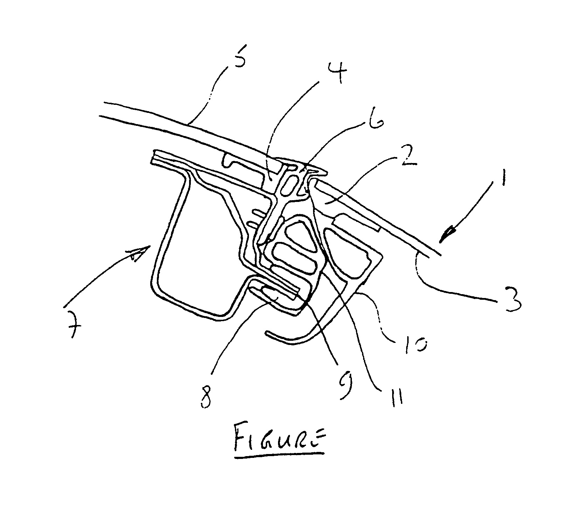

For a better understanding of the present invention and to show more clearly how it may be carried into effect reference will now be made, by way of example, to the accompanying drawing which is a sectional view of part of a vehicle body assembly according to the present invention.

The figure shows a part of a vehicle door 1 incorporating a quarterglass frame 2, for example of aluminium alloy, and quarterglass 3. The vehicle door is in its closed position in which the quarterglass frame lies adjacent to a windscreen frame 4 which carries a windscreen 5. A seal 6 is positioned between quarterglass frame 2 and windscreen frame 4.

Windscreen frame 4 is secured to A-post or pillar 7 as is the seal 6. A trim cover 8 extends around exposed ends of the pressed components, for example of sheet steel, making up a lip 9 of the pillar 7.

The pillar 7 may have a substantial rake and, particularly if the vehicle is convertible, may have to withstand substantial loads if the vehicle should overturn. In order to support the pillar 7 a channel member 10, for example of aluminium alloy, is secured to the leading edge of the quarterglass frame 2 and in the closed position of the vehicle door 1 extends around the lip 9 of pillar 7. The channel member 10 is substantially U-shaped in cross-section. The arrangement of the channel member 10 does not inhibit opening of the door while providing support for the pillar 7 while the door is closed by passing forces tending to cause the pillar 7 to collapse through the body of the door. A seal 11 is attached to the pillar 7 and is positioned between the quarterglass frame and the pillar.

As an alternative to the channel member 10 being manufactured as a separate component and subsequently being secured to the quarterglass frame, the channel member may be manufactured integral with the quarterglass frame.

## Claims

1. A vehicle body assembly comprising a pillar assembly (7) having a substantial rake, and a vehicle door (1) including a quarterglass frame (2) incorporating a leading edge having substantially the same rake as the pillar assembly for providing support for the pillar assembly in the event of the vehicle overturning characterised in that a windscreen frame (4) and a lipped seal (6) are secured to the pillar assembly (7) such that the lipped seal and the pillar assembly extend along a side of the windscreen frame, the pillar assembly (7) having an exposed flange (9) extending substantially parallel to the side of the windscreen frame, and in that a channel member (10), which is substantially U-shaped in cross-section, extends along the leading edge of the quarterglass frame (2) such that, as the door is closed, the leading edge of the quarterglass frame (2) engages in the lipped seal (6), the lipped seal being positioned between the leading edge of the quarterglass frame (2) and windscreen frame (4), whereby said channel member (10) also extends along opposite sides of the exposed flange (9) of the pillar assembly (7) while not inhibiting the opening of the door.

2. A vehicle body assembly as claimed in claim 1, characterised in that the channel member (10) is secured to or is integral with the quarterglass frame (2) of the door.

3. A vehicle body assembly as claimed in claim 1 or 2, characterised in that a seal (11) is positioned between the channel member and the pillar assembly in the closed position of the vehicle door.

4. A vehicle body assembly as claimed in claim 1, 2 or 3, characterised in that the channel member (10) is made of aluminium alloy.

## Patentansprüche

1. Fahrzeugkarosserie, die einen Holm (7) mit einem beträchtlichen Neigungswinkel und eine Fahrzeugtür (1) aufweist, die einen Dreiecksscheibenrahmen (2) beinhaltet, der eine Vorderkante mit im wesentlichen demselben Neigungswinkel wie der Holm enthält, um eine Stütze für den Holm im Falle eines Überschlagens des Fahrzeugs zu schaffen, dadurch gekennzeichnet, daß ein Windschutzscheibenrahmen (4) und eine Lippendichtung (6) am Holm (7) derart befestigt sind, daß die Lippendichtung und der Holm sich entlang einer Seite des Windschutzscheibenrahmens erstrecken, wobei der Holm (7) einen freiliegenden Flansch (9) hat, der sich im wesentlichen parallel zu der Seite des Windschutzscheibenrahmens erstreckt, und daß ein ausgekehltes Teil (10), das im wesentlichen im Querschnitt U-förmig ist, sich entlang der Vorderkante des Dreiecksscheibenrahmens (2) derart erstreckt, daß, wenn die Tür geschlossen ist, die Vorderkante des Dreiecksscheibenrahmens (2) in die Lippendichtung (6) eingreift, wobei die Lippendichtung zwischen der Vorderkante des Dreiecksscheibenrahmens (2) und dem Windschutzscheibenrahmen (4) angeordnet ist, wobei das ausgekehlte Teil (10) sich auch entlang gegenüberliegender Seiten des freiliegenden Flansches (9) des Holmes (7) erstreckt, ohne dabei das Öffnen der Tür zu behindern.

2. Fahrzeugkarosserie nach Anspruch 1, dadurch gekennzeichnet, daß das ausgekehlte Teil (10) am Dreiecksscheibenrahmen (2) der Tür befestigt ist oder in ihn integriert ist.

3. Fahrzeugkarosserie nach Anspruch 1 oder 2, dadurch gekennzeichnet, daß eine Dichtung (11) in geschlossener Stellung der Fahrzeugtür zwischen dem ausgekehlten Teil und dem Holm angeordnet ist.

4. Fahrzeugkarosserie nach Anspruch 1, 2 oder 3, dadurch gekennzeichnet, daß das ausgekehlte Teil (10) aus einer Aluminiumlegierung hergestellt ist.

## Revendications

1. Assemblage d'une carrosserie comprenant une colonne assemblée (7) ayant un angle d'inclinaison prononcé, et une portière (1) comprenant un cadre (2) de vitre de custode avec un bord avant ayant globalement le même angle d'inclinaison que la colonne assemblée, afin de fournir un support pour la colonne assemblée en cas de retournement du véhicule, caractérisé en ce qu'un cadre (4) de pare-brise et un joint (6) à lèvre sont fixés sur la colonne assemblée (7) de telle sorte que le joint à lèvre et la colonne assemblée longent un côté du cadre du pare-brise, la colonne assemblée (7) étant pourvue d'un rebord exposé (9), qui s'étend de façon essentiellement parallèle au côté du cadre du pare-brise, et en ce qu'un élément gouttière (10), d'une section transversale globale en forme de U, longe le bord avant du cadre (2) de la vitre de custode, de telle sorte que, lorsque la portière est fermée, le bord avant du cadre (2) de la vitre de custode s'emboîte dans le joint (6) à lèvre, ce joint à lèvre étant placé entre le bord avant du cadre (2) de la vitre de custode et le cadre (4) du pare-brise, et que ledit élément gouttière (10) s'étende alors aussi le long des côtés opposés du rebord exposé (9) de la colonne assemblée (7), sans pour autant empêcher l'ouverture de la portière.

2. Assemblage d'une carrosserie selon la revendication 1, caractérisé en ce que l'élément gouttière (10) est fixé au cadre (2) de la vitre de custode de la portière, ou en fait partie intégrante.

3. Assemblage d'une carrosserie selon une des revendications 1 ou 2, caractérisé en ce qu'un joint (11) d'étanchéité est disposé de telle sorte qu'il se situe entre l'élément gouttière et la colonne assemblée, lorsque la portière du véhicule est en position fermée.

4. Assemblage d'une carrosserie selon une des revendications 1, 2 ou 3, caractérisé en ce que l'élément gouttière (10) est réalisé en un alliage d'aluminium.

FIGURE